# EUROPEAN PATENT APPLICATION

(11) **EP 4 717 686 A1**
(43) Date of publication of application: **01.04.2026**
(21) Application number: 24383039.5
(22) Date of filing: 27.09.2024
(51) Int. Cl.: C04B 37/02, B32B 18/00, B32B 15/01, E04C 5/07

(54) **DEVICE TO PREVENT BREAKING OF CERAMIC PIECES FROM CORNERS**

(71) Applicant: IDM Creation Innovation, S.L., 15890 Santiago de Compostela - A Coruña (ES)
(72) Inventor: García Iglesias, Agustín, 15890 Santiago de Compostela - A Coruña (ES)
(74) Representative: Clarke, Modet y Cía., S.L.

(57) **Abstract**

Device for preventing the breaking of ceramic pieces at the corners, characterized by comprising a first piece (1) of metallic material configured to be fixed to the area of the ceramic piece to be reinforced; a second piece (2) of ceramic material configured to be fixed on the first piece (1); an adhesive between the first piece (1) and the ceramic piece to be reinforced; connecting means between the second piece (2) of ceramic material and the first piece (1); a third piece (3) of metallic material configured to be fixed on the second piece (2); and a cover (4) configured to cover at least the first piece (1), the second piece (2) and the connecting means.

## Description

### FIELD OF THE INVENTION

The present invention relates to a device for preventing breaking of ceramic pieces from corners which achieves, by means of simple parts, to reduce the risk of breaking of ceramic pieces in weak areas such as corners. The device for preventing breaking of ceramic pieces from corners subject of the invention is of application in the construction industry.

### BACKGROUND OF THE INVENTION

When a ceramic part is fabricated at a 90 degree angle, there is a significant risk of the part breaking at the corner. Similarly, when a sink is installed, there is a risk that the ceramic countertop on which the sink is installed, as it requires cutting and generating corners, may break.

In addition, considering the cost of a countertop made of ceramic material, when a crack occurs, it is necessary to repair it, which implies lifting the countertop itself, therefore, it is desirable to avoid the appearance of cracks by reinforcing the countertop.

The device subject of the invention is an innovative device designed to prevent ceramic parts from breaking at the corners, a common problem when manufacturing parts with 90-degree angles. This system reinforces the corners, eliminating the high risk of breakage and offering a reliable and durable solution.

### DESCRIPTION OF THE INVENTION

The object of the invention is a device for preventing the breaking of ceramic pieces from the corners, comprising a first piece of metallic material configured to be fixed to the area of the ceramic piece to be reinforced; a second piece of ceramic material configured to be fixed on the first piece; an adhesive between the first piece and the ceramic piece to be reinforced; and means for joining between the second piece of ceramic material and the first piece.

The device for preventing breaking of ceramic pieces from the corners object of the invention may additionally comprise a third piece of metallic material configured to be fixed on the second piece.

In the device for preventing the breaking of ceramic pieces from corners object of the invention the first piece may comprise at least one hole in its surface.

In the device for preventing the breaking of ceramic pieces from corners object of the pieces from cornersinvention the third piece may comprise at least one hole in its surface.

In the device for preventing the breaking of ceramic pieces from the corners object of the invention the joining means are to choose between an adhesive, some bolts solidary to the first piece and combination of the previous ones.

In the device for preventing the breaking of ceramic pieces from the corners object of the invention the joining means are to be chosen between an adhesive, some bolts solidary to the first piece, some bolts solidary to the third piece and combination of the previous ones.

The device for preventing breaking of ceramic subject to the invention may comprise a cover configured to cover at least the first piece, the second piece and the joining means.

### BRIEF DESCRIPTION OF THE DRAWINGS

To complement the description to be made below and in order to help a better understanding of the characteristics of the invention, the present specification is accompanied by a set of drawings on the basis of which the innovations and advantages of the object of the invention will be more easily understood.

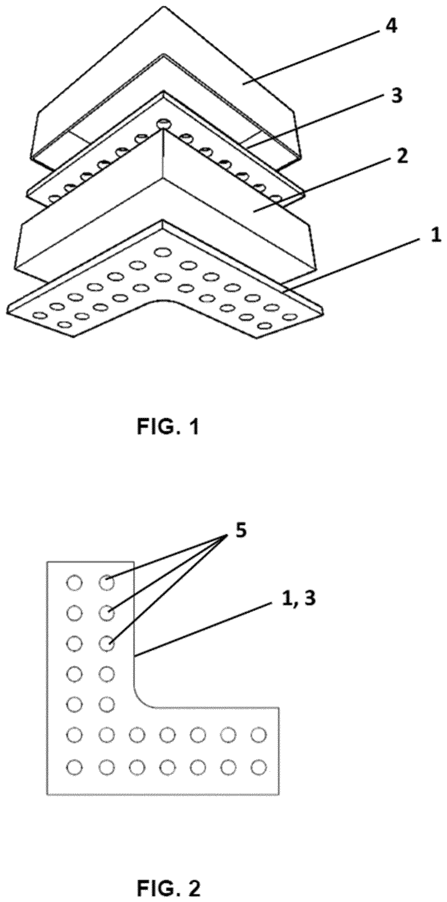

Figure 1 shows an exploded perspective view of the device for preventing the breaking of ceramic pieces from the corners that is the subject of the invention.
Figure 2 shows a plan view of a first part of the device for preventing the breaking of ceramic pieces from the corners subject of the invention.

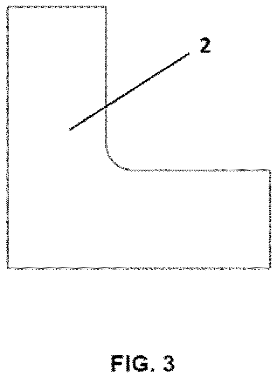

Figure 3 shows a plan view of a second part of the device for preventing breaking of ceramic pieces from the corners subject of the invention.

The numerical references used in the figures are:
1. first piece,
2. second piece,
3. third piece,
4. means of attachment,
5. cover, and
6. orifice.

### Preferred embodiment of the invention

The device for preventing breaking of ceramic pieces from corners object of the invention comprises, in the preferred embodiment, three pieces (1,2, 3) in the shape of an L, which are configured to be fixed one on top of the other and in turn to the area of the ceramic piece to be reinforced.

The parts of the device object of the invention, in the preferred embodiment, are:
- a first piece (1) of metallic material configured to be fixed to the area of the ceramic part to be reinforced;
- a second piece (2) of ceramic material configured to be fixed on the first piece (1); and
- a third piece (3) of metallic material configured to be fixed on the second piece (2).

To fix these three pieces (1,2, 3) to each other the device object of the invention comprises connecting means for fixing the first piece (1) of metallic material and the ceramic piece to be reinforced; the second piece (2) of ceramic material and the first piece (1); and the third piece (3) of metallic material and the second piece (2).

To fix the first piece (1) to the ceramic piece to be reinforced, the device object of the invention comprises an adhesive.

In one embodiment the joining means are configured by an adhesive and in an alternative embodiment, the joining means comprise bolts solidly attached to the first part (1) and/or to the third part (3), which are fixed to the second part (2).

The first piece (1) and the third piece (3) of the device object of the invention may comprise a plurality of holes (5) on their surface so that the adhesive is distributed through the holes (5) increasing the fixing capacity between the first piece (1) and the second piece (2) and between the second piece (2) and the third piece (3).

Covering these three parts (1,2, 3) which are fixed to each other, the device object of the invention comprises a cover (4) of plastic material, with this cover (4) access to the parts (1, 2, 3) fixed to each other and to the joining means is prevented, so that of the device object of the invention only the cover (4) is seen which can have any external aspect so that the device object of the invention is hidden and the external aspect is the one desired.

There is an alternative embodiment in which there is no third piece (3) of metallic material and the reinforcement is provided by the first piece (1) of metallic material attached to the ceramic piece, and the second piece (2) of ceramic material attached to the first piece (1).

In the preferred embodiment of the invention, the first piece (1) and the third piece (3) are made of iron have a thickness of 3 mm, and the second piece (2) has a thickness of 20 mm.

## Claims

1. Device for preventing ceramic pieces from breaking at the corners, **characterized in that** it comprises:
- a first piece (1) of metallic material configured to be fixed to the area of the ceramic part to be reinforced;
- a second piece (2) of ceramic material configured to be fixed on the first piece (1);
- an adhesive between the first part (1) and the ceramic part to be reinforced; and
- connecting means between the second piece (2) of ceramic material and the first piece (1).

2. Device for preventing breaking of ceramic pieces from corners, according to claim 1, **characterized in that** it additionally comprises a third piece (3) of metallic material configured to be fixed on the second piece (2).

3. Device for preventing breaking of ceramic pieces from corners, according to any one of claims 1 to 2, **characterized in that** the first piece (1) comprises at least one hole (5) in its surface.

4. Device for preventing breaking of ceramic pieces from corners, according to claim 2, **characterized in that** the third piece (3) comprises at least one hole (5) in its surface.

5. Device for preventing the breaking of ceramic pieces at the corners, according to any one of claims 1 to 4, **characterized in that** the joining means are a choice between an adhesive, bolts attached to the first piece (1) and a combination of the above.

6. Device for preventing the breaking of ceramic pieces at the corners, according to any one of claims 1 to 4, **characterized in that** the joining means are a choice between an adhesive, bolts attached to the first piece (1), bolts attached to the third piece (3) and a combination of the above.

7. Device for preventing breaking of ceramic pieces at the corners, according to any one of claims 1 to 6, **characterized in that** it comprises a
cover (4) configured to cover at least the first part (1), the second part (2) and the connecting means.
